# EUROPÄISCHE PATENTSCHRIFT

(11) **EP 3 584 487 B1**
(45) Veröffentlichungstag und Bekanntmachung des Hinweises auf die Patenterteilung: **09.03.2022**
(21) Anmeldenummer: 19180545.6
(22) Anmeldetag: 17.06.2019
(51) Int. Cl.: F16L 21/00, F16L 23/04, F16L 23/06, F23J 13/04

(54) **ABGASSYSTEM MIT ROHRBRIDE**
FLUE GAS PIPE SYSTEM WITH PIPE CLAMP
SYSTÈME DE GAZ D'ÉCHAPPEMENT AVEC BRIDE TUBULAIRE

(30) Priorität: 20.06.2018 DE 102018114834
(43) Veröffentlichungstag der Anmeldung: 25.12.2019
(73) Patentinhaber: Bächle, Dieter, 8595 Altnau (CH)
(72) Erfinder: Bächle, Dieter, 8595 Altnau (CH)
(74) Vertreter: Patent- und Rechtsanwälte Behrmann Wagner PartG mbB

(56) Entgegenhaltungen:
- DE-A1- 2 927 898
- DE-A1-102005 045 482
- DE-B3-102008 016 794
- US-A- 4 483 556

## Beschreibung

Die vorliegende Erfindung betrifft ein Abgasrohrsystem mit einer Rohrbride zum Umgreifen einer umlaufenden Stoßstelle zwischen zwei axial benachbarten Verbrennungsluftrohren eines Abgasrohrsystems einer Heizungsanlage.

Bevorzugt handelt es sich bei der Rohrbride um ein Kunststoffteil, insbesondere um ein Kunststoffspritzgussteil.

Rohrbriden zum Aneinanderfixieren von Verbrennungsluftrohren in Heizungs-Abgasrohrsystemen sind bekannt. Derartige Abgasrohrsysteme umfassen in der Regel zentrisch geführte Abgasrohre aus Kunststoff, die koaxial umgeben sind von ebenfalls aus Kunststoff ausgebildeten Verbrennungsluftrohren, durch welche dem Heizungsbrenner im Gegenstrom zu dem Abgas in den Abgasrohren Verbrennungsluft zugeführt wird.

Bei den Abgasrohren handelt es sich um Muffenrohre, die über eine in der jeweiligen Muffe vorgesehene Ringdichtung gasdicht gegenüber den Verbrennungsluftrohren verschlossen bzw. miteinander verbunden sind. Die Verbrennungsluftohre werden im Gegensatz zu den Abgasrohren in der Regel auf Stoß angeordnet und mechanisch miteinander mittels eines Zentrierrings fixiert, welcher radial innen von den Abgasrohren durchsetzt wird und welcher in mantelseitigen Öffnungen der Verbrennungsluftrohre zu deren axialen Sicherung rastend eingreifen.

Zur weiteren mechanischen Fixierung bzw. Stabilisierung der Verbrennungsluftrohre werden die Stoßstellen von benachbarten Verbrennungsluftrohren umschlossen von sog. Rohrbriden, die im Wesentlichen aus einem geschlitzten Anlagering bestehen, der in geeigneter Weise um die Verbrennungsluftrohre verspannt wird. Eine entsprechende Rohrbride, welche mittels einer Spannschnalle um die Verbrennungsluftrohre im Bereich der Stoßstelle verspannt wird, ist aus der auf die Anmelderin zurückgehende DE 10 2012 102 545 A1 bekannt.

Da in vielen Ländern die Gesetze und Vorschriften bzgl. Abgasanlagen von Heizungen verschärft wurden oder womöglich verschärft werden, ist es wünschenswert auch für die Verbrennungsluftrohre strengere Anforderungen an die Dichtheit von deren Verbindung erfüllen zu können. Demnach besteht grundsätzlich der Bedarf an einfachen, kostengünstigen sowie leicht zu montierenden Rohrbriden, die auch bei einer Montage der Verbrennungsluftrohre auf Stoß eine optimale Dichtheit gewährleisten. Eine diesen Anforderungen genügende Rohrbride ist aus der Druckschrift DE 10 2013 111 653 A1 bekannt. Bei den bisher bekannten Rohrbriden, insbesondere bei den Rohrbriden mit einer optimierten Dichtwirkung gegenüber des Stoßes oder der Stoßstelle der Verbrennungsluftrohre hat sich jedoch als nachteilig erwiesen, dass zumindest im Rahmen des Montagevorgangs der Rohrbriden, die axiale Positionierung der Rohrbride bzgl. der Stoßstelle und auch im Anschluss an die Montage der Rohrbride die axiale Sicherung der Rohrbride gegenüber den Verbrennungsluftrohren, insbesondere gegenüber der Stoßstelle zweier aneinander angrenzenden oder aneinander anliegender Verbrennungsluftrohre mit unter ausreichend ist.

Die DE 29 27 898 A1 beschreibt eine Schelle aus Kunststoff zum Einspannen zylindrischer Elemente, bei der zum Schließen der Schelle zwei Enden der Schelle durch Zusammenziehen radialer Vorsprünge an den Schellenenden in Eingriff bringbar sind und das erste Schellenende eine bündig mit ihrer radial inneren Seite an die radial innere Seite der Schelle anschließende Brücke aufweist, die den Spalt zwischen den Enden bei geschlossener Schelle auf der radial inneren Seite der Schelle überbrückt. Erfindungsgemäß weist das zweite Schellenende eine radial nach innen und in Umfangsrichtung offene Ausnehmung auf, in die die Brücke bündig mit der radial inneren Seite des zweiten Endes und seitlich anliegend einführbar ist, und die radialen Vorsprünge greifen in eine ovale Öffnung auf der Unterseite eines Spannelements ein, das einen Drehgriff aufweist.

Die US 4,483,556 A lehrt zudem eine Schlauchkonstruktion, wobei die Schlauchkonstruktion einen Schlauch umfasst, der hauptsächlich aus Polymermaterial besteht und einen Verstärkungsdraht aufweist, und eine äußere Schlauchklemmstruktur, die mit dem Schlauch verbunden ist und zwei Enden aufweist, die sobald sie miteinander verbunden sind angepasst werden, um den Schlauch an einem im Schlauch teleskopierten Element zu befestigen, indem ein im Wesentlichen ringförmiger Abschnitt des Schlauchs um das Element herum fest in Eingriff gebracht wird. Die Schlauchklemmstruktur weist eine Nut auf, die einen Teil des Verstärkungsdrahtes darin aufnimmt. Befestigungselemente befestigen den aufgenommenen Teil des Verstärkungsdrahtes an der Schlauchklemmstruktur, wobei die Befestigungselemente die Schlauchklemmstruktur mit dem Schlauch verbinden.

Die DE 10 2005 045482 A1 beschreibt, dass bei einer Rohreinheit mit wenigstens zwei in einem Verbindungsbereich etwa koaxial aneinandergefügten Leitungsrohren, der Verbindungsbereich von einer ringartigen Einrichtung umfangen ist, die von einer Schelle aus zumindest zwei querschnittlich teilkreisförmigen Teilringen gebildet ist; letztere wird in den Bereichen einander benachbarter Stirnkanten durch einen lösbaren Verschluss verbunden. An die der Stirnkante benachbarten Bereiche der Außenfläche der Wand des Teilringes ist jeweils ein haubenartiges Verschlussgehäuse so angeformt, dass in Verschlussstellung Verriegelungselemente benachbarter Verschlussgehäuse ineinander greifen. An die grundrisslich teilkreisförmig gebogene Wand des Teilringes ist im Bereich von dessen zueinander etwa parallelen Längskanten jeweils ein in Draufsicht teilringartiger Wandsteg angeformt, der die Wand begrenzt sowie in einem - bevorzugt rechten - Winkel zu deren Innenfläche verläuft.

Die DE 10 2008 016794 B3 beschreibt eine Rohreinheit, die wenigstens zwei miteinander verbundene Rohrabschnitte umfasst, deren jeder ein Innenrohr zum Führen eines - insbesondere gasartigen - Strömungsmediums aufweist, das unter Bildung eines ringförmigen Spaltraumes von einem Außenrohr größeren Durchmessers umgeben und mit diesem durch zwischen Innen- und Außenrohr verlaufende Verbindungselemente koaxial zu einem doppelwandigen Rohrabschnitt zusammengefügt ist. Die Mündungsränder der einander zugeordneten Rohrabschnitte liegen aneinander und zumindest ein Rohrabschnitt ist als doppelwandiger Rohrwinkel ausgebildet. Jenes Verbindungselement ein doppelwandiger Verbindungsstutzen, der als Insert in die einander axial benachbarten Spalträume der Rohrabschnitte eingesetzt ist sowie zwei koaxiale Rohrstücke unterschiedlichen Durchmessers enthält, deren Außenabstand der Höhe des Spaltraumes der Rohrabschnitte entspricht.

Dementsprechend liegt ausgehend von dem vorgenannten Stand der Technik die Aufgabe der Erfindung darin, ein verbessertes Abgasrohrsystem, insbesondere aus Kunststoff, für Heizungsanlagen anzugeben, dass sich durch eine erhöhte Dichtheit von Verbrennungsluftrohrverbindungen sowie durch eine verbesserte Positionierung und Positionssicherung der Rohrbriden auszeichnet. Diesbezüglich kann an dieser Stelle noch erwähnt werden, dass auch die verbesserte Positionierung sowie die verbesserte Sicherung der Rohrbride in axialer Richtung gleichermaßen einer verbesserten Dichtheit oder Abdichtung der Stoßstelle der Verbrennungsluftrohre oder der Verbrennungsluftrohrverbindung zuträglich ist, da durch eine sichere und korrekte axiale Positionierung und eine diesbezügliche Sicherung der axialen Positionierung der Rohrbride die Stoßstelle im Rahmen der Montage sicher abgedichtet und auch im Nachgang zu der Montage der Rohrbride dauerhaft mit einer entsprechenden Dichtheit versehen werden kann.

Diese Aufgabe wird hinsichtlich den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei aus in der Beschreibung vorkommenden Ansprüchen.

Der Erfindung liegt somit der Gedanke zugrunde, dass trotz der Anforderung an die Dichtheit der Stoßstelle durch das Anbringen der Rohrbride gerade eine Abkehr von einer insgesamt flachen oder gleichmäßigen Innenoberfläche der Rohrbride die Möglichkeit eröffnet, eine verbesserte axiale Positionierung und Sicherung der Rohrbride zu ermöglichen, nämlich indem eine entsprechende Nut auf der Innenoberfläche in Umfangsrichtung vorgesehen wird, die in Wirkverbindung mit entsprechenden Rohrendflanschen der Verbrennungsluftrohre die axiale Positionierung und Sicherung der Rohrbride erlaubt und dennoch die Dichtheit der Stoßstelle der Verbrennungsluftrohre nicht negativ beeinflusst. Mit anderen Worten ausgedrückt bedeutet dies, dass es in überraschender Weise gelungen ist, im Rahmen der vorliegenden Erfindung mit der erfindungsgemäßen Nut eine Unebenheit in die Innenoberfläche der Rohrbride einzubringen, die trotz ihrer diesbezüglichen grundsätzlichen Eignung oder Gefahr, die Dichtheit der Stoßstelle zweier benachbarter Verbrennungsluftrohre nicht negativ beeinflusst, gleichzeitig aber die axiale und die axiale Sicherung der Rohrbride deutlich verbessert. Die Gefahr oder die Eignung einer Unebenheit auf der Innenoberfläche der Rohrbride die Dichtheit zu verringern oder aufzuheben besteht, da durch die entsprechende Ausnehmung oder die erfindungsgemäß vorgesehene Nut grundsätzlich die Anlage der Innenoberfläche der Rohrbride mit den äußeren Mantelflächen der Verbrennungsluftrohre verringert wird und darüber hinaus mögliche Strömungskanäle für Luft entstehen können, die die Dichtheit nachteilig beeinflussen.

Durch die bevorzugte Ausbildung der Rohrbride aus Kunststoff, insbesondere als Kunststoffspritzgussteil, ergibt sich eine gewisse Flexibilität des Bauteils, die vorteilhaft dem Ausgleich unterschiedlicher Durchmessermaße zweier benachbarter Verbrennungsluftrohre zuträglich ist. Gleiches gilt für den Ausgleich unterschiedlich radialer Höhen der Rohrendflansche zweier benachbarter Verbrennungsluftrohre.

Konstruktiv einfach kann eine Weiterbildung der vorliegenden Erfindung dadurch realisiert werden, dass die Nut durchgehend in Umfangsrichtung ausgebildet ist. Dadurch wird die Montage der Rohrbride unabhängig von einer Winkelorientierung gegenüber einem oder gegenüber beiden benachbarten Verbrennungsluftrohren bzgl. der Mittel- oder Symmetrieachsen der Rohrbride und der Verbrennungsluftrohre ermöglicht.

Ebenfalls kann gemäß einer vorteilhaften Ausführungsform vorgesehen sein, dass die Nut axial mittig auf der Innenoberfläche verläuft oder ausgebildet ist. Dies ermöglicht einerseits eine besonders intuitive Montage der Rohrbride. Außerdem profitiert die Dichtheit von dem Zusammenwirken einer mittig ausgeführten Nut einerseits und der Kombination aus der Zunge und des die Zunge übergreifenden Überlappungsabschnitts.

Weiter kann besonders vorteilhaft vorgesehen sein, dass die Nut in Umfangsrichtung auf einer Innenseite der Zunge verläuft. Auch dadurch wird gleichermaßen die Dichtheit der Stoßstelle sowie die axiale Sicherung der Rohrbride durch die Innenumfangsnut positiv beeinflusst.

Besonders bevorzugt kann zudem vorgesehen sein, dass die Zunge und/oder der Überlappungsabschnitt in Umfangsrichtung mindestens eine Einlaufschräge aufweist und die Nut zumindest auf einem Teil der zumindest einen Einlaufschräge ausgebildet ist. Dadurch wird einerseits ebenfalls sichergestellt, dass die Rohrbride in jedem Rotationszustand bzgl. der Zentralachse montiert werden kann. Außerdem wird dadurch sichergestellt, dass beim Zusammenwirken entsprechender Einlaufschrägen, insbesondere wenn diese im montierten Zustand mit entsprechend komplementär ausgebildeten Schrägen zur Anlage kommen, eine durchgängige, gleichmäßige Nut in Umfangsrichtung realisiert wird, was wiederum die Dichtheit der Rohrbride oder die Abdichtung der Stoßstelle der Verbrennungsluftrohre positiv beeinflusst.

Ebenfalls kann besonders bevorzugt vorgesehen sein, dass die Fixiermittel eine Schnalle und eine Lasche aufweisen, wobei die Schnalle und die Lasche zueinander komplementäre Rastmittel zum Verrasten der Rohrbride in unterschiedlichen Verspannpositionen aufweisen. Dadurch wird, insbesondere zusammen mit der einfachen und sicheren axialen Positionierung der Rohrbride eine besonders einfache Montage der Rohrbride erlaubt, da durch ein entsprechendes in Eingriff bringen der komplementären Rastmittel und das Erreichen einer eine maximale Verspannposition darstellenden Verrastung der Rastmittel die Rohrbride schnell und sicher montiert und im Anschluss daran besondere effektiv gegen ein axiales Verschieben oder Verrutschen gesichert ist.

Eine weitere besonders bevorzugte Ausgestaltung der Rohrbride sieht vor, dass eine sich von der Anlagefläche bis zu einem Nutgrund erstreckende Nuttiefe größer ist, als der von der äußeren Mantelfläche der Verbrennungsluftrohre ausgemessene radiale Flanschhöhe. Dadurch werden verschiedene Vorteile erreicht. Einerseits wird gewährleistet, dass die Nut die Rohrendflansche umgreift und damit zur axialen Positionierung und Sicherung der Rohrbride beiträgt. Gleichzeitig wird aber auch gewährleistet, dass die Innenoberfläche des Anlagerings abseits der Innenumfangsnut mit der äußeren Mantelfläche der Verbrennungsluftrohre zur Anlage kommt und sich an dieser abstützt und im Rahmen der Verspannung der Rohrbride mittels der Fixiermittel bei der Montage der Rohrbride eine Dichtwirkung, insbesondere eine Abdichtung der äußeren Mantelflächen der Verbrennungsluftrohre gegenüber den Anlageflächen der Rohrbride der Nut ermöglicht. Mit anderen Worten ausgedrückt bedeutet dies, dass die größer gewählte Nuttiefe gegenüber der radialen Flanschhöhe sicherstellt, dass die Rohrendflansche durch ihre radiale Erhebung gegenüber der äußeren Mantelflächen der Verbrennungsluftrohre die Dichtheit der Stoßstelle durch die Anpressung bzw. Verspannung der Rohrbride nicht negativ beeinflussen können.

Gemäß einer besonderes bevorzugten Ausgestaltung kann in diesem Zusammenhang vorgesehen sein, dass eine sich von der Innenoberfläche bis zu einem Nutgrund erstreckende Nuttiefe dem 1,1-fachen bis 1,4-fachen, insbesondere dem 1,2-fachen bis 1,3-fachen, der von der äußeren Mantelfläche der Verbrennungsluftrohre ausgemessenen radialen Flanschhöhe der Rohrendflansche entspricht. Dadurch wird nicht nur der oben bereits beschriebene vorteilhafte Effekt bewirkt, dass die Rohrendflansche grundsätzlich nicht in der Lage sind, die Dichtheit der Rohrbride zu beeinflussen, sondern es wird auch sichergestellt, dass entsprechende Fertigungstoleranzen bei der Fertigung der Verbrennungsluftrohre und/oder bei der Fertigung der Rohrendflansche für die Verbrennungsluftrohre berücksichtigt werden, sodass die Nut oder Innenumfangsnut der Rohrbride einerseits die axiale Positionierung und Sicherung gewährleisten kann, andererseits jedoch die Dichtheit der Stoßstelle der Verbrennungsluftohre gewährleiste ist oder gewährleistet bleibt.

Eine erfindungsgemäße Ausführungsform der Rohrbride sieht vor, dass die Nut in axialer Richtung zumindest eine sich von der Anlagefläche zum Nutgrund erstreckende Einlaufschräge aufweist. Die Einlaufschräge der Nut in axialer Richtung dient in erster Linie zum Zusammenwirken mit den Rohrendflanschen der Verbrennungsluftrohre. Sie bewirkt, dass je nach Positionierung des oder der Verbrennungsluftrohre gegenüber der Rohrbride im Rahmen der Verspannung des Anlagerings der Rohrbride bei der Montage der Rohrbride, die in Umfangsrichtung verlaufenden Rohrendflansche in axialer Richtung von der Innenoberfläche weg in Richtung der Nut oder des Nutgrundes der Nut kraftbeaufschlagt werden. Damit wird einerseits die Montage der Rohrbride weiter erleichtert, da die Rohrbride bzgl. der Stoßstelle im Rahmen der Verspannung des Anlagerings eine Selbstzentrierung oder Selbstpositionierung durch die axiale Einlaufschräge der Nut erfährt. Zudem wird sichergestellt, dass die Rohrendflansche im montierten Zustand der Rohrbride so orientiert oder positioniert sind, dass eine ungehinderte Anlage der Innenoberfläche des Anlagerings an der äußeren Mantelfläche der Verbrennungsluftrohre erzielt und damit eine besonders hohe Dichtheit der Stoßstelle erreicht werden kann.

Die sich von der Anlagefläche zum Nutgrund erstreckende Einlaufschräge kann insbesondere im Zusammenwirken mit den Rohrendflanschen der Verbrennungsluftrohre noch eine weitere wichtige und erfindungsgemäße Funktion erfüllen, denn wenn die Rohrendflansche auf einer vom Rohrende abgewandten Seite eine zumindest abschnittsweise konusförmige Verjüngung aufweisen, wobei die Form der Verjüngung mit der Form der Einlaufschräge übereinstimmt kann die Einlaufschräge einerseits und der Rohrendflansch oder die Rohrendflansche andererseits bei einer montierten Rohrbride eine zusätzliche Dichtungswirkung herbeiführen, die in Form einer Konusdichtung durch das aneinander anliegen und bevorzugt das aneinander anpressen von Einlaufschräge und rückseitig abgeschrägtem Rohrendflansch ausgebildet wird. Bevorzugt sind die Abschrägungen der Rohrendflansche über den gesamten Umfang ausgebildet.

Bevorzugt weist die Nut auf beiden axialen Seiten eine sich von der Anlagefläche zum Nutgrund erstreckende Einlaufschräge auf, so dass auf beiden Seiten die vorteilhafte Wirkung zur Selbstzentrierung und die/oder je nach Ausgestaltung der Rohrendflansche die vorteilhafte Wirkung zur Ausbildung einer Konusdichtung erreicht werden kann.

Bevorzugt ist in einer solchen Ausgestaltung mit zumindest einer Einlaufschräge und einer zugeordneten Abschrägung des Rohrendflansches die axiale breite des Nutgrunds so auf den oder die Rohrendflansche abgestimmt, dass nach der Montage der Rohrbride an den Verbrennungsluftrohren eine axial wirkende Anpresskraft der Einlaufschräge an dem entsprechend abgeschrägten Teil oder Abschnitt des Rohrendflansches erzeugt und damit die vorteilhafte Dichtwirkung einer Konusdichtung bereitstellt wird.

Bzgl. des Abgasrohrsystems wird die o.g. Aufgabe gelöst durch ein Abgasrohrsystem mit mindestens einem Abgasrohr, welches koaxial von mindestens zwei auf Stoß angeordneten Verbrennungsluftrohre umgeben ist, deren umlaufenden Stoßstelle von einer Rohrbride nach einem der vorhergehenden Ansprüche umgriffen ist derart, dass die von dem Überlappungsabschnitt radial außen überlappte Zunge auf der Stoßstelle aufliegt und sich der Überlappungsabschnitt zu beiden Axialseiten der Zunge auf den Mantelflächen der Verbrennungsluftrohre abstützt und erfindungsgemäß dadurch gekennzeichnet ist, dass die Stoßstelle zumindest zwei axial aneinander anliegende, in Umfangsrichtung zumindest abschnittsweise verlaufenden Rohrendflansche aufweist und dass die in der Innenoberfläche in Umfangsrichtung zumindest abschnittsweise ausgebildete Nut der Rohrbride die Rohrendflansche umgreift. Dadurch wird einerseits in besonders vorteilhafter Weise, nämlich über das Zusammenwirken des Überlappungsabschnitts und der Zunge die Abdichtung der Stoßstelle durch die Rohrbride gewährleistet, gleichzeitig wird durch das Zusammenwirken der Innenumfangsnut der Rohrbride und der Rohrendflansche die einfache und sichere Positionierung und axiale Sicherung der Rohrbride während und nach der Montage der Rohrbride ermöglicht, was wiederum eine vorteilhafte Auswirkung auf die Herstellung und Beibehaltung der Dichtheit der Stoßstelle ausübt und somit ebenfalls die Dichtheit der Stoßstelle der benachbarten Verbrennungsluftrohre unterstützt.

Denn einerseits wird durch die Ausgestaltung der Zunge und des Überlappungsabschnittes eine Art Labyrinthdichtung gebildet, wobei benachbart zu jeder Axialseite der Zunge ein radial nach außen geschlossener von dem Überlappungsabschnitt überdeckter bzw. geschlossener, sich in radialer Richtung sowie in Umfangsrichtung erstreckender Spalt zwischen der Zunge und dem die Zunge in Axialrichtung überlappenden Bereichen des Überlappungsabschnitts gebildet wird. Somit wird die Dichtung in bevorzugter Weise erreicht. Gleichzeitig wird durch die Nut oder die Innenumfangsnut der Rohrbride unter Beibehaltung der Dichtheit oder in überraschenderweise ohne negative Beeinflussung der Dichtheit, die axiale Positionierung und Sicherung der Rohrbride gewährleistet.

Gemäß einer ersten besonders bevorzugten Ausführungsform des Abgasrohrsystems ist die Rohrbride aus Kunststoff gefertigt, insbesondere als Kunststoffspritzgussteil ausgebildet.

Gemäß einer ebenfalls besonders vorteilhaften Ausführungsform kann vorgesehen sein, dass der Rohrendflansch einstückig mit dem Verbrennungsluftrohr ausgebildet ist. Dies hat einerseits zur Folge, dass die Stoßstelle und damit die mögliche Quelle von Undichtigkeit oder Luftaustritt aus dem Verbrennungsluftrohr oder den Verbrennungsluftrohren lediglich aus dem Übergang, also der Stoßstelle, der benachbarten Verbrennungsluftrohre resultieren kann. Dementsprechend ist auch die Herstellung der Dichtheit leichter zu erreichen. Außerdem hat die einteilige Ausgestaltung des Verbrennungsluftrohres mit dem daran angeordneten oder daran ausgebildeten Rohrendflansch auch fertigungstechnische Vorteile, auf die im Nachfolgenden noch eingegangen werden wird.

Denn gemäß einer besonders bevorzugten Ausgestaltung ist das Verbrennungsluftrohr als Gussteil, insbesondere als Kunststoff-Spritzgussteil ausgebildet. Denn die entsprechenden Verfahren erlauben in besonders vorteilhafter und einfacher Art und Weise die Ausbildung eines Flansches oder eines Kranzes, der über die äußere Mantelfläche der Verbrennungsluftrohre hervorragt. Damit kann das entsprechende Verbrennungsluftrohr einfach, schnell und kostengünstig hergestellt werden, was auch die Herstellung und die Kosten für das Abgasrohrsystem positiv beeinflusst.

Gemäß einer weiteren vorteilhaften Ausgestaltung kann vorgesehen sein, dass der Rohrendflansch durch eine mit dem Verbrennungsluftrohr verbindbare Muffe, insbesondere durch eine Schnappmuffe an einem Rohrende des Verbrennungsluftrohres ausgebildet wird. Dadurch wird zwar ein weiterer Übergang, nämlich der Übergang zwischen dem Rohrende einerseits und dem Rohrendflansch andererseits geschaffen, die beispielsweise bei einer einstückigen Ausgestaltung eines mit einem Rohrendflansch versehenen Verbrennungsluftrohrs nicht gebildet wird, andererseits werden dadurch jedoch jedweder Rohre, insbesondere Kunststoffrohre zur Verwendung in dem erfindungsgemäßen Abgasrohrsystem geeignet. Denn es müssen nicht zwangsläufig Rohre oder Verbrennungsluftrohre Verwendung finden, die bereits einen angeformten oder einstückig ausgebildeten Rohrendflansch aufweisen. Gleichermaßen ist diese Ausführungsform auch deshalb vorteilhaft, weil die entsprechenden Muffen, insbesondere die Schnappmuffen bei der Montage der entsprechenden Abgasrohrsystem zwangsläufig zum Einsatz kommen oder zumindest vorteilhaft eingesetzt werden.

Auch bzgl. der Herstellung der entsprechenden Verbrennungsluftrohre kann eine mehrteilige Ausgestaltung des Verbrennungsrohrs und des Rohrendflansches vorteilhaft sein. Denn dann kann gemäß einer weiteren besonders bevorzugten Ausführungsform vorgesehen sein, dass das Verbrennungsluftrohr als extrudiertes Bauteil, insbesondere als extrudiertes Kunststoffbauteil ausgebildet ist, bei dem eine einstückige Ausgestaltung zusammen mit einem Rohrendflansch bedingt durch die Grenzen des Extrusionsverfahrens nicht möglich ist.

Es ist zudem vorteilhaft, wenn die Verbrennungsluftrohre des Abgassystems Rohrendflansche aufweisen, die auf einer dem Rohrende abgewandten Seite zumindest abschnittsweise eine konusförmige Abschrägung aufweisen, so dass die abgeschrägten Abschnitte der rückseitigen oder rückwärtigen Seiten der Rohrendflansche mit einer sich von der Anlagefläche zum Nutgrund erstreckende Einlaufschräge der Nut der Rohrbride zusammenwirken können und dabei eine Konusdichtung ausbilden.

Bevorzugt sind beide Rohrendflansche abgeschrägt und die Rohrbride wiest in axialer Richtung auf beiden Seiten eine entsprechende Einlaufschräge auf, so dass beidseitig durch die Montage der Rohrbride an den Verbrennungsluftrohren eine Anpresswirkung der Einlaufschrägen an den abgeschrägten Abschnitten der Rohrendflansche erzeugt wird und dadurch eine zusätzliche Dichtwirkung der Rohrbride erzeugt in Form einer Konusdichtung wird.

Weitere Vorteile, Merkmale und Einzelheiten der Erfindung ergeben sich aus der nachfolgenden Beschreibung der anhand schematischer Zeichnungen erläuterten Ausführungsbeispielen.

### Darin zeigen:

- Fig. 1: eine schematische Seitenansicht eines Ausschnitts eines erfindungsgemäßen Abgasrohrsystems;
- Fig. 2: eine vergrößerte Darstellung der in der Fig. 1 als X gekennzeichneten Ausschnitts des erfindungsgemäßen Abgasrohrsystems;
- Fig. 3: eine perspektivische Darstellung eines Ausschnitts eines erfindungsgemäßen Abgasrohrsystems.

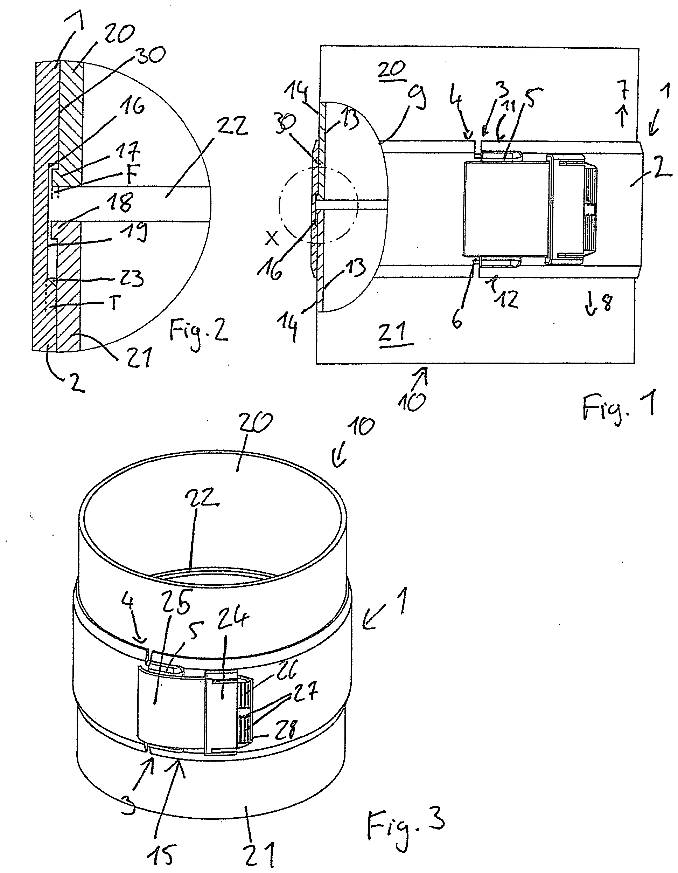

Fig. 1 zeigt eine Rohrbride 1, welche einen Anlagering 2 aufweist, der verschließbar ist und im montierten Zustand im wesentlichen eine zylindrische Form aufweist. Der Anlagering 2 ist geschlitzt ausgebildet, was bedeutet, dass er öffenbar ausgestaltet ist und dazu einen ersten freien Endbereich 3 und einen zweiten freien Endbereich 4 aufweist. Am ersten freien Endbereich 3 ist eine Aufnahme eines taschenförmiger Überlappungsabschnitts ausgebildet, der im montierten Zustand eine Zunge 6 des zweiten freien Endbereichs 4 aufnimmt und sowohl radial außen überlappt sowie in beiden Axialrichtungen 7, 8.

Zu diesem Zweck ist der Überlappungsabschnitt 5 in einer Axialschnittansicht U-förmig ausgestaltet und weist zwei in axialer Richtung beabstandete Schenkel auf, die die Zunge 6 in axialer Richtung überragen und die radial innen jeweils einen Teil einer Anlagefläche 11, 12 ausbilden mit denen der Überlappungsabschnitts 5 zu beiden Axialseiten der Zunge 6 im montierten Zustand an den Verbrennungsluftrohren 20, 21 anliegt. Hinsichtlich der genaueren Ausgestaltung und Ausgestaltungsmöglichkeiten der Zunge 6 sowie des Überlappungsabschnitts 5 wird auf die Offenbarung der Druckschrift DE 10 2013 111 653 A1 Bezug genommen, die hiermit vollumfänglich in die vorliegende Offenbarung aufgenommen wird.

Im linken Bereich der Fig. 1 ist ein Bereich 9 als Schnitt durch das Abgasrohrsystem 10 dargestellt. Dabei ist durch den Schnitt sowohl die innere Mantelfläche 13 als auch die äußere Mantelfläche 14 der Verbrennungsluftrohre 20, 21 zu erkennen. Außerdem ist erkennbar, dass abseits der freien Endbereiche 3, 4 der Rohrbride 1 die Innenoberfläche 30 an der äußeren Mantelfläche 14 im Endbereich der Verbrennungsluftrohre 20, 21 zur Anlage kommt oder an diese angepresst wird und somit, zumindest abseits der freien Endbereiche 3, 4, die Innenoberfläche 30 die Dichtung gegenüber den Verbrennungsluftrohren 20, 21 bewirkt. Ebenfalls ist in der Schnittdarstellung beziehungsweise in dem Schnittbereich 9 bereits erkennbar, dass die Rohrbride 1 auf der inneren Fläche oder Innenoberfläche 30 in Umfangsrichtung eine Nut 16 aufweist. Zur deutlicheren Beschreibung der Wirkung der Nut sowie der Zusammenwirkung mit den Verbrennungsluftrohren 20, 21 wird auf die nachfolgende Beschreibung zur Figur 2 verwiesen, in der der in der Fig. 1 strichpunktiert eingezeichnete Bereich X vergrößert dargestellt ist.

In der Fig. 2 ist ein Schnitt durch einen Abschnitt eines erfindungsgemäßen Abgasrohrsystems dargestellt, der neben der Rohrbride 1 die Verbrennungsluftrohre 20, 21 im Bereich der Stoßstelle 22 zeigt. Dabei ist dargestellt, dass die auf der Innenoberfläche 30 des Anlagerings 2 der Rohrbride 1 ausgebildete Nut oder Innenumfangsnut 16 zwei Rohrendflansche 17, 18, die zumindest abschnittsweise in Umfangsrichtung an den Rohrenden der Verbrennungsluftrohre 20, 21 ausgebildet sind, umgreift. Dadurch, dass die sich von der Innenoberfläche 30 zum Nutgrund 19 erstreckende Nuttiefe t größer ausgebildet ist, als die von der äußeren Mantelfläche 14 ausgemessene, radiale Flanschhöhe F, wird sichergestellt, dass zwar einerseits beim Verspannen des Anlagerings 2 im Rahmen der Montage der Rohrbride 1 sowohl im Bereich der Endbereiche 3, 4 als auch abseits eine zuverlässige Dichtung der Stoßstelle 22 gewährleistet wird, gleichzeitig aber durch das Umgreifen der Rohrendflansche 17, 18 durch die Nut 16 eine einfache und sichere Positionierung der Rohrbride 1 sowie eine Sicherung der Rohrbride 1 gegenüber axialer Verschiebungen sichergestellt wird, was langfristig oder dauerhaft die Dichtung der Stoßstelle 22 vorteilhaft sicherstellt oder aufrechterhält. Im Beispiel der Fig. 2 sind die Rohrendflansche 17, 18 einstückig mit den Verbrennungsluftrohren 20, 21, beispielsweise in Form eines einteiligen Kunststoff-Spritzgussteils ausgebildet. Alternativ zu dieser Ausgestaltung kann auch eine mehrteilige Ausgestaltung vorgesehen sein.

Ebenfalls ist in der Vergrößerung der Fig. 2 zu entnehmen, dass die Nut 16 zwischen dem Nutgrund 19 und der Anlagefläche 12 eine Einlaufschräge 23 aufweist, die beispielsweise dazu dient, dass im Rahmen des Verspannens des Anlagerings 2 oder der Rohrbride 1 der der jeweiligen Einlaufschräge 23 zugeordnete Rohrendflansch 18 in den Bereich der Nut, insbesondere in dem Bereich des Nutgrunds 19 überführt wird, was wiederum eine einfache Positionierung der Rohrbride 1 sowie eine sichere Montage der Rohrbride 1 sicherstellt und zudem besonders vorteilhaft die Dichtheit der Stoßstelle 22 ermöglicht.

Gleichermaßen kann die Einlaufschräge 23 als ein Teil einer Konusdichtung zwischen Rohrbride 1 und Verbrennungsluftrohr 20, 21 dienen, wenn nämlich der Rohrendflansch 17, 18 eine entsprechende dem Rohrende abgwandte konusförmige Abschrägung aufweist, welche in den Figuren nicht dargestellt ist, und die Rohrbride 1, insbesondere die Nut 16, im Bezug auf die Rohrendflansche 17, 18 so ausgebildet ist, dass bei einer montierten Rohrbride 1 eine Anpresskraft der Einlaufschrägen 23 an den an- oder abgeschrägten Bereichen des Rohrendflansches 17 oder der Rohrendflansche 17, 18 bewirkt wird. Dadurch kann in vorteilhafter Weise die Dichtigkeit der mit der Rohrbride verbundenen Verbrennungsluftrohre 20, 21 deutlich verbessert werden.

Die Fig. 3 zeigt eine perspektivische Darstellung eines Ausschnitts eines erfindungsgemäßen Abgasrohrsystems 10 samt einer erfindungsgemäßen Rohrbride 1. Dabei ist neben den Elementen, die bereits in der Fig. 1 dargestellt und beschrieben sind, welche in der Fig. 3 mit entsprechend identischen Bezugszeichen versehen sind, nochmals eine Innenansicht der Stoßstelle 22 der Verbrennungsluftrohre 20, 21 dargestellt. Der Vollständigkeit halber sei an dieser Stelle noch erwähnt, dass die Verbrennungsluftrohre 20, 21 koaxial um ein in der Fig. 3 nicht dargestelltes Abgasrohr verlaufen. Außerdem sind in der Fig. 3 die Fixiermittel 15 zu erkennen, welche im Beispiel der Fig. 3, wie auch im Beispiel der Fig. 1 durch eine Schnalle 24 und eine Lasche 25 gebildet werden, wobei die Schnalle 24 und die Lasche 25 zueinander komplementäre Rastmittel 26 zum Verrasten der Rohrbride 1 in unterschiedlichen Verspannpositionen umfassen. Im Beispiel der Fig. 3 sind die Rastmittel 26 durch entsprechende Reihen von Rastnasen 27 gebildet, wobei die der Schnalle zugeordneten komplementären Rastmittel 26, nämlich entsprechend komplementäre Rastnasen 27 in der Fig. 3 nicht dargestellt sind. Bevorzugt sind die Schnalle 24 sowie die Lasche 25 einteilig mit der Rohrbride 1 ausgebildet, besonders bevorzugt als einteiliges Kunststoffspritzgussteil. Zudem kann besonders vorteilhaft vorgesehen sein, dass die Lasche 25 als in radialer Richtung der Rohrbride 1 zumindest abschnittsweise elastisch verformbare Biegekurve ausgestaltet ist, sodass nach einem anfänglichen Einführen der Lasche 25 in die Schnalle 24 eine radiale Kraftbeaufschlagung auf die Lasche 25 in eine im Wesentlichen in Umfangsrichtung gerichtete Kraft des freien Endes 28 der Lasche 25 umgewandelt wird, sodass ein entsprechend radialer Druck auf die Lasche 25 zu einem Verrasten der Rastmittel und damit zu einem Verspannen der Rohrbride 1 führt.

## Patentansprüche

1. Abgasrohrsystem mit mindestens einem Abgasrohr, welches koaxial von mindestens zwei auf Stoß angeordneten Verbrennungsluftrohren (20, 21) umgeben ist, deren umlaufende Stoßstelle (22) von einer Rohrbride (1) zum Umgreifen einer umlaufenden Stoßstelle (22) zwischen zwei axial benachbarten Verbrennungsluftrohren (20, 21) eines Abgasrohrsystems einer Heizungsanlage mit einem Anlagering (2) zur Anlage an Mantelflächen (13, 14) beider Verbrennungsluftrohre (20, 21), welcher mit Fixiermitteln (15) um die Verbrennungsluftrohre (20, 21) verspannt ist,
wobei der Anlagering (2) zum Öffnen des Anlagerings (2) zu Montagezwecken einen ersten sowie einen zweiten freien Endbereich (3, 4) aufweist, und wobei im montierten Zustand ein endseitiger Überlappungsabschnitt (5) des ersten Endbereichs (3) eine endseitige Zunge (6) des zweiten Endbereichs (4) radial außen in Umfangsrichtung überlappt
wobei der Überlappungsabschnitt (5) im montierten Zustand die Zunge (6) in beide Axialrichtungen (7, 8) übergreift sowie zu beiden Axialseiten der Zunge (6) jeweils eine Anlagefläche (11, 12) aufweist, und sich axial neben der Zunge (6) auf beiden Seiten der Stoßstelle (22) mit jeweils einer Anlagefläche (11, 12) an den äußeren Mantelflächen (14) der Verbrennungsluftrohre (20, 21) abzustützt, wobei eine Innenoberfläche (30) des Anlagerings (2) in Umfangsrichtung zumindest abschnittsweise eine Nut (16) aufweist, welche zum Umgreifen von an der Stoßstelle (22) der Verbrennungsluftrohren (20, 21) zumindest abschnittsweise ausgebildeten in Umfangsrichtung verlaufenden Rohrendflanschen (17, 18) dient,
wobei die Nut (16) in axialer Richtung zumindest eine sich von der Anlagefläche (11, 12) bis zu einem Nutgrund (19) erstreckende Einlaufschräge (23) aufweist, wobei die Stoßstelle (22) zumindest zwei axial aneinander anliegende, in Umfangsrichtung zumindest abschnittsweise verlaufende Rohrendflansche (17, 18) aufweist, wobei die Einlaufschräge (23) im Zusammenwirken mit zumindest einem Rohrendflansch (17, 18) eine Konusdichtung ausbildet und wobei der zumindest eine Rohrendflansch (17, 18) auf einer vom Rohrende abgewandten Seite eine zumindest abschnittsweise konusförmige Verjüngung aufweist.

2. Abgasrohrsystem nach Anspruch 1,
**dadurch gekennzeichnet,**
**dass** die Nut (16) durchgehend in Umfangsrichtung ausgebildet ist.

3. Abgasrohrsystem nach Anspruch 1 oder 2,
**dadurch gekennzeichnet,**
**dass** die Nut (16) axial mittig auf der Innenoberfläche (30) verläuft.

4. Abgasrohrsystem nach einem der Ansprüche 1 bis 3,
**dadurch gekennzeichnet,**
**dass** die Nut (16) in Umfangsrichtung auf einer Innenseite der Zunge (6) verläuft.

5. Abgasrohrsystem nach einem der Ansprüche 1 bis 4,
**dadurch gekennzeichnet, dass** die Zunge (6) und/oder der Überlappungsabschnitt (5) in Umfangsrichtung mindestens eine Einlaufschräge (23) aufweist und die Nut (16) zumindest auf einem Teil der zumindest einen Einlaufschräge (23) ausgebildet ist.

6. Abgasrohrsystem nach einem der Ansprüche 1 bis 5,
**dadurch gekennzeichnet,**
**dass** die Fixiermittel eine Schnalle (24) und eine Lasche (25) aufweisen, wobei die Schnalle (24) und die Lasche (25) zueinander komplementäre Rastmittel (26) zum Verrasten der Rohrbride (1) in unterschiedlichen Verspannpositionen umfassen.

7. Abgasrohrsystem nach einem der Ansprüche 1 bis 6,
**dadurch gekennzeichnet,**
**dass** eine sich von der Innenoberfläche (30) bis zu einem Nutgrund (19) erstreckende Nuttiefe größer ist, als die von der äußeren Mantelfläche (14) der Verbrennungsluftrohre (20, 21) aus gemessene radiale Flanschhöhe.

8. Abgasrohrsystem nach einem der Ansprüche 1 bis 7,
**dadurch gekennzeichnet,**
**dass** eine sich von der Innenoberfläche (30) bis zu einem Nutgrund (19) erstreckende Nuttiefe dem 1,1-fachen bis 1,4-fachen, insbesondere dem 1,2-fachen bis 1,3 fachen, der von der äußeren Mantelfläche (14) der Verbrennungsluftrohre (20, 21) aus gemessenen radialen Flanschhöhe entspricht.

9. Abgasrohrsystem nach einem der Ansprüche 1 bis 8,
**dadurch gekennzeichnet,**
**dass** der Rohrendflansch (17, 18) einstückig mit den Verbrennungsluftrohr (20, 21) ausgebildet ist.

10. Abgasrohrsystem nach einem der Ansprüche 1 bis 9,
**dadurch gekennzeichnet,**
**dass** das Verbrennungsluftrohr (20, 21) als Gussteil, insbesondere als Kunststoff-Spritzgussteil, ausgebildet ist.

11. Abgasrohrsystem nach einem der Ansprüche 1 bis 10,
**dadurch gekennzeichnet,**
**dass** der Rohrendflansch (17, 18) durch eine mit dem Verbrennungsluftrohr (20, 21) verbindbare Muffe, insbesondere durch eine Schnappmuffe an einem Rohrende des Verbrennungsluftrohres (20, 21) ausgebildet wird.

12. Abgasrohrsystem nach Anspruch 11,
**dadurch gekennzeichnet,**
**dass** das Verbrennungsluftrohr (20, 21) als extrudiertes Bauteil, insbeosondere als extrudiertes Kunststoffbauteil, ausgebildet ist.

## Claims

1. An exhaust pipe system comprising at least one exhaust pipe coaxially surrounded by least two combustion air pipes (20, 21) disposed edge to edge, their circumferential joint (22) being surrounded by a pipe clamp (1) for engaging around a circumferential joint (22) between two axially adjacent combustion air pipes (20, 21) of an exhaust pipe system of a heating system, the pipe clamp (1) having a contact ring (2) for contacting circumferential surfaces (13, 14) of the two combustion air pipes (20, 21) and being tightened around the combustion air pipes (20, 21) by means of fixation means (15), the contact ring (2) having a first and a second free end portion (3, 4) for opening the contact ring (2) for installation purposes, and an overlap section (5) at the end of the first end portion (3) overlapping a tongue (6) at the end of the second end portion (4) in the circumferential direction on the radial outside in the installed state,
the overlap section (5) covering the tongue (6) in both axial directions (7, 8) in the installed state and having a contact surface (11, 12) on each of the two axial sides of the tongue (6) and being supported on the outer circumferential surfaces (14) of the combustion air pipes (20, 21) on both sides of the joint (22) axially adjacent to the tongue (6) by means of a respective contact surface (11, 12),
at least part of an inner surface (30) of the contact ring (2) having a groove (16) in the circumferential direction, the groove (34) serving to engage around pipe end flanges (17) which are formed at least at part of the joint (22) of the combustion air pipes (20, 21) and extend in the circumferential direction,
the groove (16) having at least one inlet slope (23) extending from the contact surface (11, 12) to a groove base (19) in the axial direction, the joint (22) having at least two axially contacting pipe end flanges (17, 18) at least partially extending in the circumferential direction, the inlet slope forming a cone seal in cooperation with at least one pipe end flange (17, 18) and the at least one pipe end flange (17, 18) having an at least partially conical tapering on a side facing away from the pipe end.

2. The exhaust pipe system according to claim 1,
**characterized in that**
the groove (16) is continuous in the circumferential direction.

3. The exhaust pipe system according to claim 1 or 2,
**characterized in that**
the groove (16) extends axially centrally on the inner surface (30).

4. The exhaust pipe system according to any one of claims 1 to 3,
**characterized in that**
the groove (16) extends on an inner side of the tongue (6) in the circumferential direction.

5. The exhaust pipe system according to any one of claims 1 to 4,
**characterized in that** the tongue (6) and/or the overlap section (5) has/have at least one inlet slope (23) in the circumferential direction and the groove (16) is formed at least on a part of the at least one inlet slope (23).

6. The exhaust pipe system according to any one of claims 1 to 5,
**characterized in that**
the fixation means have a buckle (24) and a loop (25), the buckle (24) and the loop (25) comprising complementary locking means (26) for locking the pipe clamp (1) in different tightening positions.

7. The exhaust pipe system according to any one of claims 1 to 6,
**characterized in that**
a groove depth extending from the inner surface (30) to a groove base (19) is greater than the radial flange height measured from the outer circumferential surface (14) of the combustion air pipes (20, 21).

8. The exhaust pipe system according to any one of claims 1 to 7,
**characterized in that**
a groove depth extending from the inner surface (30) to a groove base (19) corresponds to 1.1 times to 1.4 times, in particular to 1.2 times to 1.3 times, the radial flange height measured from the outer circumferential surface (14) of the combustion air pipes (20, 21).

9. The exhaust pipe system according to any one of claims 1 to 8,
**characterized in that**
the pipe end flange (17, 18) is formed in one piece with the combustion air pipe (20, 21).

10. The exhaust pipe system according to any one of claims 1 to 9,
**characterized in that**
the combustion air pipe (20, 21) is formed by a cast part, in particular a plastic injection-molded part.

11. The exhaust pipe system according to any one of claims 1 to 10,
**characterized in that**
the pipe end flange (17, 18) is formed by a sleeve which can be connected to the combustion air pipe (20, 21), in particular by a snap sleeve, at a pipe end of the combustion air pipe (20, 21).

12. The exhaust pipe system according to claim 11,
**characterized in that**
the combustion air pipe (20, 21) is formed by an extruded component, in particular an extruded plastic component.

## Revendications

1. Système de tuyau d'échappement comprenant au moins un tuyau d'échappement entouré coaxialement par au moins deux tuyaux d'air de combustion (20, 21) qui sont disposés bord à bord et dont le joint (22) circonférentiel est entouré par un collier de tuyau (1) destiné à s'engager autour d'un joint (22) circonférentiel entre deux tuyaux d'air de combustion (20, 21) axialement adjacents d'un système de tuyau d'échappement d'une installation de chauffage, le collier de tuyau (1) comprenant un anneau de contact (2) qui est destiné à contacter des surfaces d'enveloppe (13, 14) des deux tuyaux d'air de combustion (20, 21) et qui est serré autour des tuyaux d'air de combustion (20, 21) au moyen des moyens de fixation (15),
l'anneau de contact (2) ayant une première et une deuxième partie d'extrémité (3, 4) libre pour ouvrir l'anneau de contact (2) à des fins de montage, une partie de chevauchement (5) à l'extrémité de la première partie d'extrémité (3) chevauchant une languette (6) à l'extrémité de la deuxième partie d'extrémité (4) dans la direction circonférentielle à l'extérieur radial dans l'état monté,
la partie de chevauchement (5) s'engageant sur la languette (6) dans les deux directions axiales (7, 8) dans l'état monté et ayant une surface de contact (11, 12) respective des deux côtés axiaux de la languette (6) et s'appuyant sur les surfaces d'enveloppe (14) extérieures des tuyaux d'air de combustion (20, 21) axialement à côté de la languette (6) des deux côtés du joint (22) par une surface de contact (11, 12) respective,
une surface intérieure (30) de l'anneau de contact (2) ayant, au moins dans des sections, une rainure (16) dans la direction circonférentielle, ladite rainure (16) servant à s'engager autour de brides d'extrémité de tuyau (17, 18) qui sont formées, au moins dans des sections, au joint (22) des tuyaux d'air de combustion (20, 21) et qui s'étendent dans la direction circonférentielle,
la rainure (16) ayant au moins une pente d'entrée (23) s'étendant de la surface de contact (11, 12) à un fond de rainure (19) dans la direction axiale, le joint (22) ayant au moins deux brides d'extrémité de tuyau (17, 18) se contactant axialement et s'étendant, au moins dans des sections, dans la direction circonférentielle,
la pente d'entrée (23) formant un cône d'étanchéité en coopération avec au moins une bride d'extrémité de tuyau (17, 18) et l'au moins une bride d'extrémité de tuyau (17, 18) ayant un rétrécissement au moins partiellement conique d'un côté détourné de l'extrémité de tuyau.

2. Système de tuyau d'échappement selon la revendication 1,
**caractérisé en ce que**
la rainure (16) est continue dans la direction circonférentielle.

3. Système de tuyau d'échappement selon la revendication 1 ou la revendication 2,
**caractérisé en ce que**
la rainure (16) s'étend axialement au centre de la surface intérieure (30).

4. Système de tuyau d'échappement selon l'une quelconque des revendications 1 à 3,
**caractérisé en ce que**
la rainure (16) s'étend sur un côté intérieur de la languette (6) dans la direction circonférentielle.

5. Système de tuyau d'échappement selon l'une quelconque des revendications 1 à 4,
**caractérisé en ce que** la languette (6) et/ou la partie de chevauchement (5) a/ont au moins une pente d'entrée (23) dans la direction circonférentielle et la rainure (16) est formée au moins sur une partie de l'au moins une pente d'entrée (23).

6. Système de tuyau d'échappement selon l'une quelconque des revendications 1 à 5,
**caractérisé en ce que**
les moyens de fixation ont une boucle (24) et une patte (25), la boucle (24) et la patte (25) comprenant des moyens de verrouillage (26) complémentaires pour verrouiller le collier de tuyau (1) dans différentes positions de serrage.

7. Système de tuyau d'échappement selon l'une quelconque des revendications 1 à 6,
**caractérisé en ce**
**qu'**une profondeur de rainure s'étendant de la surface intérieure (30) à un fond de rainure (19) est supérieure à la hauteur de bride radiale mesurée à partir de la surface d'enveloppe (14) extérieure des tuyaux d'air de combustion (20, 21).

8. Système de tuyau d'échappement selon l'une quelconque des revendications 1 à 7,
**caractérisé en ce**
**qu'**une profondeur de rainure s'étendant de la surface intérieure (30) à un fond de rainure (19) correspond à 1,1 fois à 1,4 fois, notamment à 1,2 fois à 1,3 fois, la hauteur de bride radiale mesurée à partir de la surface d'enveloppe (14) extérieure des tuyaux d'air de combustion (20, 21).

9. Système de tuyau d'échappement selon l'une quelconque des revendications 1 à 8,
**caractérisé en ce que**
la bride d'extrémité de tuyau (17, 18) est formée en une pièce avec le tuyau d'air de combustion (20, 21).

10. Système de tuyau d'échappement selon l'une quelconque des revendications 1 à 9,
**caractérisé en ce que**
le tuyau d'air de combustion (20, 21) est formé par une pièce moulée, notamment par une pièce moulée par injection en matière plastique.

11. Système de tuyau d'échappement selon l'une quelconque des revendications 1 à 10,
**caractérisé en ce que**
la bride d'extrémité de tuyau (17, 18) est formée à une extrémité du tuyau d'air de combustion (20, 21) par un manchon qui peut être relié au tuyau d'air de combustion (20, 21), notamment par un manchon d'encliquetage.

12. Système de tuyau d'échappement selon la revendication 11,
**caractérisé en ce que**
le tuyau d'air de combustion (20, 21) est formé par un composant extrudé, notamment par un composant en matière plastique extrudé.
